# EUROPÄISCHE PATENTSCHRIFT

(11) **EP 1 866 457 B1**
(45) Veröffentlichungstag und Bekanntmachung des Hinweises auf die Patenterteilung: **11.09.2013**
(21) Anmeldenummer: 05811005.7
(22) Anmeldetag: 10.11.2005
(51) Int. Cl.: C23C 14/56, B23K 15/00

(54) **VORRICHTUNG ZUR BEARBEITUNG VON WERKSTÜCKEN IM VAKUUM**
DEVICE FOR MACHINING WORKPIECES IN A VACUUM
DISPOSITIF POUR USINER DES PIECES SOUS VIDE

(30) Priorität: 17.11.2004 DE 102004055388
(43) Veröffentlichungstag der Anmeldung: 19.12.2007
(73) Patentinhaber: pro-beam systems GmbH, 55128 Mainz (DE)
(72) Erfinder: WAHL, Matthias, 64287 Darmstadt (DE); WEIL, Alexander, 55270 Klein-Winternheim (DE)
(74) Vertreter: Erb, Henning
(86) Internationale Anmeldenummer: PCT/EP2005/012071
(87) Internationale Veröffentlichungsnummer: WO 2006/053678

(56) Entgegenhaltungen:
- WO-A-03/028938
- DE-A1- 10 215 040
- DE-A1- 19 812 670
- US-A- 5 538 560

## Beschreibung

Die vorliegende Erfindung befaßt sich mit einer Vorrichtung zum Bearbeiten von Werkstücken im Vakuum nach dem Oberbegriff des Anspruches 1.

Derartige Bearbeitungsvorrichtungen sind beispielsweise aus der DE 43 41 635 A1, der DE 197 42 923 A1 und der EP 0 463 392 A1 für scheibenförmige Werkstücken und aus der WO 03/028938 A1 bereits auch für nicht scheibenförmige Werkstucke bekannt. Bei den bekannten Vorrichtungen werden die Werkstücke mit Hilfe der Transfervorrichtung unterhalb einer Oberseite der Bearbeitungsvorrichtung transportiert und sowohl die Schleusenkammer als auch die Bearbeitungsvorrichtungen sind an dieser Oberseite angeordnet. Für zweidimensionale Werkstücke mit einer Bearbeitungsfläche ist diese Lösung ideal, während bei der Bearbeitung dreidimensionaler Werkstücke der Nachteil besteht, daß die Transfervorrichtung eine Hubbewegung ausführen muß, die üblicherweise wenigstens der Höhe des Werkstückes entspricht. Die langen Verstellwege führen jedoch zu erhöhten Transportzeiten im Vakuum, so daß sich entsprechend der Werkstückhöhe längere Bearbeitungszeiten ergeben, wobei lange Wege der Anpreßbewegung einerseits und das Erreichen einer guten Anpreßwirkung andererseits auch einen Zielkonflikt darstellen können, weil dann ungünstige Hebelverhältnisse auftreten könnten.

Die EP 0 555 764 B1 beschreibt eine Vakuumbearbeitungsanlage, die ohne Anpreßbewegung arbeitet. Hierzu sind vergrößerbare Dichtungen vorgesehen, die mit Hilfe von Gas oder Flüssigkeit mit einem Druck beaufschlagbar sind, dadurch ihr Volumen vergrößeren und so für die Abdichtung zwischen dem Vakuum und dem Umgebungsdruck sorgen. Neben dem hohen Aufwand für die Druckbeaufschlagung ist auch ein rascher Verschleiß der Dichtungen zu befürchten.

Eine weitere Transportvorrichtung in einer Vakuumkammer ist aus der DE 198 12 670 11 bekannt.

Die Aufgabe der vorliegenden Erfindung besteht darin, eine Vorrichtung zum Bearbeiten von Werkstücken im Vakuum zu schafen, die unabhängig von der Werkstückhöhe mit kleinen Wegen für die Anpreßbewegung auskommt.

Erfindungsgemäß wird die Aufgabe durch eine Vorrichtung mit den Merkmalen des Anspruches 1 gelöst.

Dadurch besteht der Vorteil, dass das Werkstück bereits in der Schleusenstation unter Umgebungsdruck auf dem Niveau der Bearbeitungsstation mit Bezug auf die Transportrichtung abgelegt werden kann, so daß nach dem Evakuieren der Schleusenkammer nur eine minimale Hubbewegung zur Aufhebung der Dichtwirkung an der Dichtstelle zwischen Schleusenkammer und Vakuumkammer notwendig ist und nach einem Transportvorgang des Werkstückes in die Bearbeitungsstation dieses dort durch die seitliche Wandöffnung bearbeitet werden kann. Die Anpreßbewegung kann, je nach Ausbildung der Transfervorrichtung, auch zu einer kleinen Verlagerung des Halters mit. Werkstück in der Bearbeitungsstation führen, denkbar ist aber auch eine. Verlagerung ausschließlich des jeweils in der Schleusenstation befindlichen Halters oder auch - bei ruhendem Halter - ein Anpressen eines beweglich gehaltenen Dichtelements der Vakuumkammer an den oberen Rand der Wandung. In jedem Fall ist nur noch eine Hubbewegung zwischen der Dichtstellung einerseits und einer Stellung andererseits notwendig, in welcher die Dichtflächen gerade so weit freigegeben sind, daß ein Transport des Werkstückes in dem Halter in eine Bearbeitungsstation erfolgen kann.

Die geringe Hubbewegung ermöglicht es in einer besonders bevorzugten Weiterbildung der Erfindung auch ohne weiteres, einen einzigen Antrieb zum Durchführen einer kombinierten Dreh/Hubbewegung der Halter vorzusehen, der beispielsweise über Auslaufschrägen oder eine Kulissenführung als entsprechendes Getriebe die Halter kurz vor Erreichen der Endstellungen in den Stationen zur Durchführung der Anpreßbewegung anhebt.

Grundsätzlich sind verschiedene Arten von Transfervorrichtungen denkbar, die die Werkstücke auf einem karussellartigen Träger auf einer Kreisbahn bewegen oder auf einem linearen Träger Werkstücke zwischen der wenigstens einen Schleusenstation und der Bearbeitungsstation translatorisch bewegen. Die Richtung der Anpreßbewegung muß auch nicht notwendigerweise senkrecht zur Transportrichtung liegen. Insbesondere bei einer Drehbewegung der Transfervorrichtung zum Transportieren der Werkstücke kann bei einer Alternativlösung der vorliegenden Erfindung anstelle einer Hubbewegung senkrecht zur Transportrichtung auch eine Bewegung parallel zur Transportrichtung der Werkstücke zwischen den Stationen zur Abdichtung der Schleusenkammer vorgesehen sein. In einem solchem Fall würde dann die Schleusenstation radial in Bezug auf die Drehachse der Transfervorrichtung liegen, während die Bearbeitungsstation eine Bearbeitung des Werkstückes durch die Öffnung der Wandung des Halters in einer Richtung parallel zu dieser Drehachse vorsehen würde. Unter dem oberen Rand der Wandung ist dann entsprechend der der Schleusenstation zugewandte Rand der Wandung zu verstehen.

Bei einer Transfervorrichtung, die die Werkstücken mittels einer Drehbewegung zwischen den Stationen bewegt und eine Hubbewegung parallel zur Drehachse zur Abdichtung vorsieht, liegt das Niveau der Bearbeitungsstation dann entsprechend unterhalb der Schleusenkammer, während bei einer radialen Hubbewegung zur Abdichtung die Bearbeitungsstation auf einem Radius liegt, der kleiner ist als der Radius der Dichtstelle.

Um rotationssymmetrische Teile umlaufend bearbeiten zu können, ist in einer besonders bevorzugten Ausführungsform der Erfindung vorgesehen, daß die Halter eine Drehantriebsvorrichtung aufweisen, die ein Drehen des Werkstückes in der Bearbeitungsstation ermöglicht. Auf diese Weise ist es möglich, beispielsweise einen Turbinenrotor durch Verschweißen einer Turbinenwelle und eines Turbinenrades in der Bearbeitungsstation herzustellen, indem die beiden drehbar gelagerten Teile kontinuierlich gedreht und damit dem durch die Fensteröffnung in der Wandung einstrahlenden Elektronenstrahl ausgesetzt werden. Gegebenenfalls können auch andere Strahlbearbeitungen bei sich drehendem Werkstück erfolgen, die auf das Vorhandensein eines Vakuums angewiesen sind.

Besonders bevorzugt ist die Kombination eines eine Rotation des Werkstückes ermöglichenden Halters bei parallel zur Drehachse der Transfervorrichtung liegender Drehachse des Werkstückes insbesondere für die Fertigung von Turbinenrotoren, da dann die gemeinsame Lagerung der Haltevorrichtung, für die Turbinenwelle und für das Turbinenrad in einem Teil ermöglicht ist. Die Bearbeitung erfolgt dann zwischen den in den Halter aufgenommenen Haltevorrichtungen. Dies gestattet wiederum einen besonders runden und planen Lauf bei der Fertigung, so daß sich die sehr hohen Anforderungen an Rundlauf und Planschlag beim fertigen Turbinenrotor leichter einhalten lassen.

Die in der Wandung zur Bearbeitung vorgesehene Öffnung kann auf verschiedene Art und Weise ausgebildet sein. Zunächst ist es möglich, die Öffnung durch ein Fenster in der Wandung zu bilden, es ist aber auch möglich, eine Ausnehmung vom oberen Rand der Wandung zur Bildung der Öffnung vorzusehen. In jedem Fall ist darauf zu achten, daß die Öffnung in der Schleusenstation sicher abgedichtet werden kann.

Hierzu kann in einer weiteren Ausführungsform der Erfindung eine separate Dichtvorrichtung vorgesehen sein, die in der Schleusenstation die als Fenster ausgebildete Öffnung in der Wandung des jeweiligen Halters druckdicht verschließt. Diese Dichtvorrichtung verhindert, daß es bei der Durchführung des Be-/Entladevorgangs nach dem Fluten der Schleusenkammer zu einem Druckanstieg in der Vakuumkammer kommt. In der Regel läßt sich die Dichtwirkung mit einer separaten Dichtvorrichtung einfacher und mit höherer Betriebssicherheit erreichen, als durch andere Abdichtmaßnahmen, die beispielsweise die Beiwegungen des Halters durch die Transfervorrichtung ausnutzen. Bei einem praktischen Ausführungsbeispiel kann als Dichtvorrichtung ein Schließkolben vorgesehen sein, der von der Vakuumkammer aus an den Rand der Öffnung in der Wandung abdichtend anpressbar ist. Zweckmäßig ist es dabei, den Schließkolben oder ein ihn betätigendes Stellelement druckdicht durch die Wandung der Vakuumkammer zu führen, insbesondere um im Wartungsfall einen leicht zugänglichen Schließkolben zu haben.

Eine andere Ausführungsform der Erfindung sieht vor, daß die Wandung zu der Bearbeitungsvorrichtung hin anstelle eines Fensters schräg abfallend zur Bildung der Öffnung ist, so daß die Bearbeitung dort über dem oberen Rand der Wandung erfolgen kann, wobei im Bereich der Schleusenstation eine entsprechend schräg ausgebildete Dichtfläche vorgesehen ist. Bei dieser Lösung besteht die Öffnung aus der heruntergezogenen Wandung, wodurch sich der Vorteil ergibt, daß in der Schleusenstation die Dichtwirkung allein durch beispielsweise eine Hubbewegung der Transfervorrichtung und das Anpressen an die schräge Dichtfläche erfolgen kann, ohne daß beispielsweise eine separate Dichtvorrichtung zur Abdichtung eines Fensters oder einer sonstigen Öffnung notwendig wäre. Die Schräge sollte eine Flächenerstreckung im wesentlichen parallel zur Bewegungsrichtung der Transfervorrichtung haben, so daß die Hubbewegung nicht oder nur minimal vergrößert wird.

Die beschriebene Vorrichtung muß nicht auf zwei Stationen beschränkt sein, die lediglich ein gleichzeitiges Be-/Entladen und Bearbeiten von Werkstücken ermöglichen. Vielmehr ist das Vorsehen wenigstens einer weiteren Bearbeitungsstation ohne weiteres denkbar, sofern beispielsweise Bedarf an einer zusätzlichen Bearbeitungsstation, die auch eine Bearbeitung des Werkstückes in einer Richtung senkrecht zu der Bearbeitungsrichtung durch die Öffnung vorsehen kann, besteht. Solche weiteren Bearbeitungsvorgänge, die auf eine evakuierte Umgebung angewiesen sind, sind beispielsweise Beschichtungsvorgänge oder auch Wärmebehandlungen mit einem Elektronenstrahl. Möglich ist mit der vorliegenden Erfindung auch, eine Radialbearbeitung des Werkstückes einerseits und eine stirnseitige Bearbeitung andererseits in einer zusätzlichen Bearbeitungsstation durchzuführen, die, wie bereits erwähnt, senkrecht zu der Bearbeitungsstation durch die seitliche Wandung angeordnet ist.

Nachfolgend wird anhand der beigefügten Zeichnungen näher auf ein Ausführungsbeispiel der Erfindung eingegangen. Es zeigen:
- Fig. 1: eine schematische Schnittdarstellung einer Vorrichtung zur Werkstückbearbeitung im Vakuum während des Bearbeitens und des Be-/Entladens;
- Fig. 2: die Vorrichtung nach Fig. 1 in einem Transportzustand.

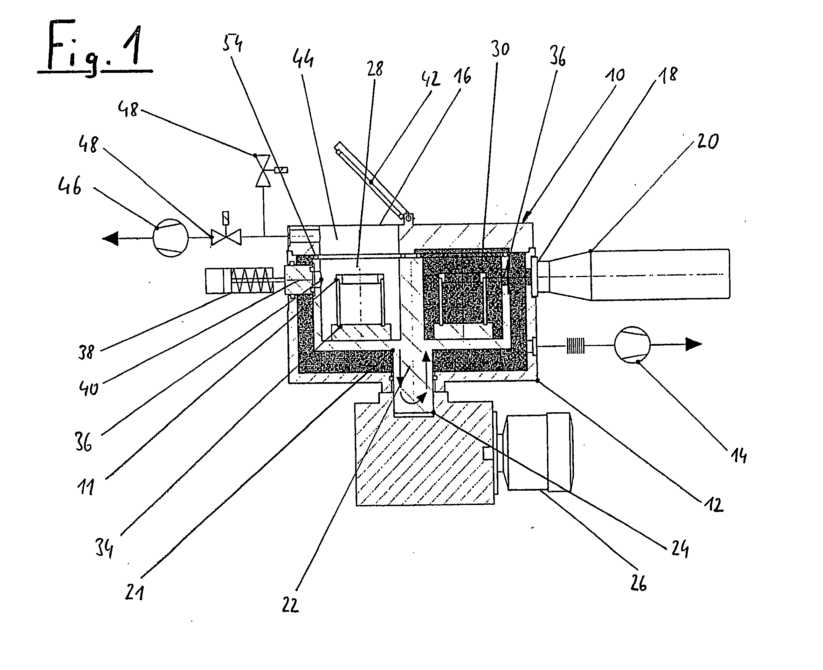

In Fig. 1 ist eine Vorrichtung 10 zum Bearbeiten von Werkstücken 11 (vereinfacht dargestellt) mit dreidimensionaler Erstreckung, d. n. nicht scheibenförmiger Ausbildung, gezeigt. Die Vorrichtung ist dabei insbesondere für das Verschweißen von Turbinenwellen und Turbinenrädern zu Turbinenrotoren gedacht, grundsätzlich ist sie aber auch für beispielsweise das radiale Verschweißen von Druckspeichern aus Ober- und Unterteilen, Wellen mit Kupplungssternen, wie sie beispielsweise bei Anlassern von Automobilen Verwendung finden, oder zum radialen Verschweißen von gedrehten Wellen mit umgeformten Blechglocken geeignet, die typischerweise in Automatikgetrieben eingesetzt werden.

Die Vorrichtung besitzt eine Vakuumkammer 12, die mit Hilfe einer Vakuumpumpe 14 auf ein für die durchzuführende Bearbeitung geeignetes Druckniveau evakuierbar ist. Die Vorrichtung 10 besitzt eine Schleusenstation 16 zum Einschleusen der Werkstücke 11 aus der Umgebung in die Vakuumkammer 12 und einer Bearbeitungsstation 18, in welcher die Werkstücke 11 mit Hilfe eines Elektronenstrahlgenerators 20 einem Schweißvorgang unterzogen werden können. Je nach gewünschter Bearbeitung können in der Bearbeitungsstation 18 auch andere Bearbeitungsvorrichtungen vorgesehen sein.

Der Transport der Werkstücke zwischen der Schleusenstation 16 und der Bearbeitungsstation 18 erfolgt mit Hilfe eine Transfervorrichtung 21 mit einem drehbaren Halterträger 22, der über ein Dreh-/Hubgetriebe mit einem elektrischen Drehantriebsmotor 26 gekoppelt ist. Das Dreh-/Hubgetriebe 24 ermöglicht das Verschwenken des Halterträgers 22 zum Transport der Werkstücke 11 zwischen den Stationen 16, 18 einerseits und die Durchführung einer Hubbewegung im Bereich der einzelnen Stationen andererseits, auf deren Zweck später noch näher eingegangen wird.

Der Halterträger 22 besitzt zwei zylindrische Ausnehmungen 28, 30, die als Halter für Werkstücke 11 vorgesehen sind. Die identisch ausgebildeten Halter 28, 30 verfügen über jeweils eine umlaufende Wandung, die sich bis über das zu bearbeitende Werkstück hinaus erstrecken, d. h. die in den Haltern 28, 30 aufgenommenen Werkstücke ragen nicht über die Wandungen hinaus. Während bei dem gezeigten Ausführungsbeispiel die Halter 28, 30 und der Halterträger 22 einstückig ausgebildet sind, ist auch eine vom Halterträger 22 unabhängige Ausbildung der becherförmigen Halter 28, 30 möglich. In den Haltern 28, 30 sind jeweils angetriebene Drehhaltevorrichtungen 34 vorgesehen, die ein Rotieren der Werkstücke 11 in der Bearbeitungsstation 18 ermöglichen, um beispielsweise mit Hilfe des Elektronenstrahlgenerators 20 eine umlaufende Verschweißung der Turbinenwelle mit dem Turbinenrad zu ermöglichen. Die Drehhaltevorrichtungen 34 für die Werkstückteile, d. h. die Turbinenwelle und das Turbinenrad, sind in einem Teil gelagert, so daß durch die gemeinsame Bearbeitung beider Lagerstellen bei deren Herstellung ein besonders runder und planer Lauf während der Bearbeitung der Werkstücke 11 ermöglicht ist, was wiederum zu einem fertigen Turbinenrotor führt, der höchsten Anforderungen an Rundlauf und Planschlag genügt.

Der Eintritt des Elektronenstrahls des Elektronenstrahlgenerators 20 erfolgt durch eine seitliche Öffnung 36 in der Halterwandung.

Ferner ist eine Dichtvorrichtung 38 vorgesehen, die durch die Wandung der Vakuumkammer 12 geführt ist und einen Schließkolben 40 aufweist, mit Hilfe dessen die Öffnung 36 der jeweiligen Kammer 28 im Bereich der Schleusenstation druckdicht verschließbar ist.

In Fig. 1 sind ferner ein Schleusendeckel 42, mit Hilfe dessen eine Schleusenkammer 44 gebildet und druckdicht verschlossen werden kann, sowie eine weitere Vakuumpumpe 46 und Flutventile 48 gezeigt, mit Hilfe derer die Schleusenkammer 44 wahlweise evakuiert oder geflutet werden kann.

In Fig. 1 ist die zuvor beschriebene Vorrichtung mit geöffnetem Schleusendeckel 42 gezeigt. Gleichzeitig befindet sich der Halterträger 22 in einer durch den Antrieb 24, 26 angehobenen Stellung, so daß der umlaufende obere Rand der Wandung des in der Schleusenstation 16 befindlichen Halters 28 mit Hilfe einer Dichtung druckdicht gegen eine obere Decke der Vakuumkammer 12 angepreßt ist. Der Schließkolben 40 verschließt die seitliche Öffnung 36 der ersten Kammer 28, so daß in der Vakuumkammer 12 und im Inneren des zweiten Halters 30 Vakuumbedingungen herrschen (schraffiert dargestellt), während das Innere des zweiten Halters 28 unter Umgebungsdruck steht. An der Schleusenstation ist in der in Fig. 1 gezeigten Stellung eine Entnahme eines bearbeiteten Werkstückes 11 und ein Einsetzen in die Drehhaltevorrichtungen 34 beispielsweise eines Turbinenrades und einer Turbinenwelle möglich, die in der Bearbeitungsstation bearbeitet werden sollen.

Während dieses Be- und Entladevorganges erfolgt in der Bearbeitungsstation 18 die bereits angesprochene Durchführung des Schweißvorganges. Da durch die Fensteröffnung 36 einerseits und die nicht abgedichtete Oberseite des Halters 30 andererseits eine Verbindung zwischen dem Inneren des Halters 30 und der Vakuumkammer 12 besteht, herrschen im gesamten Wirkbereich des Elektronenstrahles die geforderten Vakuumbedingungen.

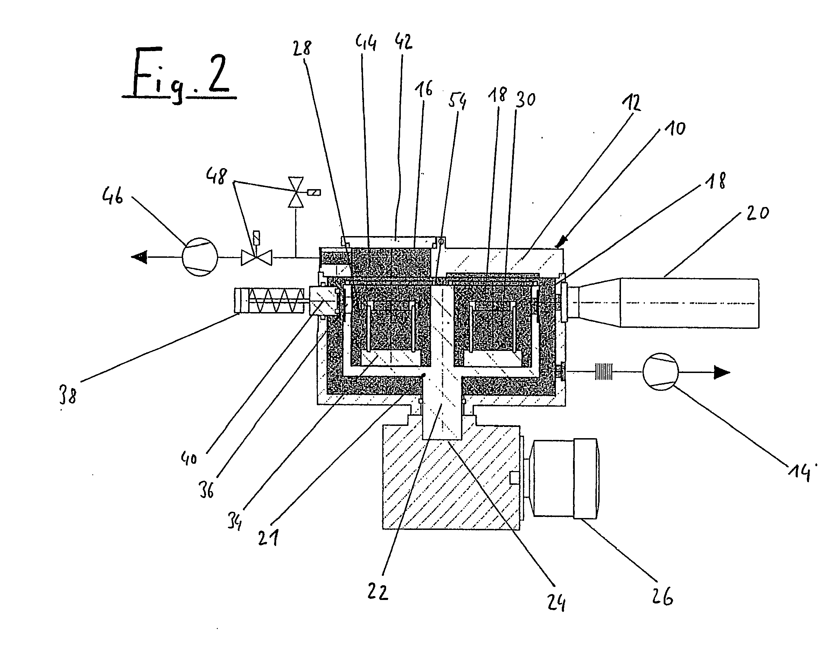

Nach Beendigung des Beladevorganges wird der Schleusendeckel 42 geschlossen, wobei der Bearbeitungsvorgang ggf. noch andauern kann. Nunmehr beginnt die Vakuumpumpe 46 damit, die Schleusenkammer 44 und damit auch das Innere des Halters 28 zu evakuieren, bis auch dort die in der Vakuumkammer 12 vorliegenden Bedingungen herrschen. Liegt der entsprechende Druckausgleich vor, kann nach Beendigung des-Bearbeitungsverfahrens der Schließkolben 40 von der Öffnung 36 abgehoben werden, worauf hin über den Dreh-/Hubantrieb 24, 26 der Halterträger 22 zunächst abgesenkt und dann um 180° verschwenkt wird. Das Ende dieses Transportzustandes ist in Fig. 2 gezeigt, wobei sich der Halterträger 22 noch in der abgesenkten Stellung befindet. Schließlich wird die Bewegung des Halterträgers durch eine erneute Anhebung abgeschlossen, wobei wiederum der umlaufende obere Rand der Wandung im Bereich der Schleusenstation 18 gegen die obere Decke der Vakuumkammer 12 gepreßt wird. Nach Erreichen der Endlage kann in der Bearbeitungsstation 20 unmittelbar mit dem erneuten Bearbeitungsvorgang begonnen werden. In der Schleusenstation 18 wird zunächst die Öffnung 36 durch Betätigung des Schließkolbens 40 druckdicht verschlossen und anschließend wird die Schleusenkammer 44 und damit auch das Innere des Halters 28 durch Öffnen der Schleusenflutventile 48 geflutet. Sobald der Druckausgleich mit der Umgebung hergestellt ist, kann der Schleusendeckel 42 für einen erneuten Be-/Entladevorgang geöffnet werden, wodurch sich wiederum die in Fig. 1 gezeigte Stellung der Vorrichtung 10 ergibt. Weiterbildungen der gezeigten Vorrichtung können insbesondere weitere Bearbeitungsstationen vorsehen, beispielsweise Beschichtungs- oder Härtungsvorrichtungen, wobei es grundsätzlich auch denkbar ist, weitere Bearbeitungsvorrichtungen an der Oberseite der Vakuumkammer 12 vorzusehen. Damit ist zum einen eine radial seitliche Bearbeitung aber auch eine stirnseitige Bearbeitung möglich. Anstelle des kombinierten Dreh-/Hubantriebes können selbstverständlich auch Antriebe vorgesehen sein, bei denen die Drehbewegung durch einen ersten Antriebsmotor und die Hubbewegung durch ein zweites Antriebsglied bewerkstelligt wird, insbesondere wenn der Halterträger und die Halter getrennt ausgebildet sind.

Hinsichtlich der in den Abbildungen gezeigten Fenster als öffnungen 36 in den Wandungen der Halter ist anzumerken, daß nach der Erfindung, die Wandung des Halters in ihrer Höhe zur Bearbeitungsstation hin abfallend ausgebildet ist, so daß die Bearbeitung, d. h. beim gezeigten Ausführungsbeispiel der Schweißstrahl, über den Rand der Wandung das Werkstück erreichen kann. Die Öffnung ist entsprechend durch den heruntergezogenen Rand der Wandung gebildet. Die Abdichtung in der Schleusenstation kann bei einer solchen Ausführungsform besonders einfach dadurch erreicht werden, daß dort eine dem oberen Rand der Wandung entsprechend abgeschrägte und/oder konturierte Dichtfläche vorgesehen ist, so daß die Abdichtung der Öffnung mit dem Abdichten der Schleusenkammer zu der Vakuumkammer einhergeht. Eine separate Dichtvorrichtung kann bei einer solchen Ausführungsform entfallen.

## Patentansprüche

1. Vorrichtung zum Bearbeiten von Werkstücken (11) im Vakuum mit einer Vakuumkammer (12), die wenigstens eine Schleusenstation (16) und wenigstens eine Bearbeitungsstation (18) mit einer Bearbeitungsvorrichtung (20) aufweist, und einer Transfervorrichtung (21) die wenigstens einen Halter (28, 30) zur Aufnahme der Werkstücke (11) aufweist und diesen zwischen den Stationen (16, 18) transportiert, wobei der wenigstens eine Halter (28, 30) mit einer umlaufenden Wandung versehen ist, deren oberer Rand in der Schleusenstation (16) mittels einer relativen Andruckbewegung gegen eine Dichtung in eine Dichtstellung beweglich ist, in welcher die Schleusenkammer (44) gegen das Innere der Vakuumkammer (12) abgedichtet ist, wobei die Wandung jedes Halters sich wenigstens in Teilbereichen im wesentlichen über die gesamte Höhe der zu bearheitetiden Werkstücken erstreckt und die Höhe der Wandung erheblich größer als der Weg der Andruckbewegung ist, **dadurch gekennzeichnet, dass** die Wandung eine seitliche Öffnung (36) aufweist, durch die in der Bearbeitungsstation (18) die Bearbeitung des jeweiligen Werkstücks (11) erfolgt, wobei entweder die Wandung zu der Bearbeitungsvorrichtung hin schräg abfallend zur Bildung der Öffnung ist, so daß die Bearbeitung dort über dem oberen Rand der Wandung erfolgen kann, wobei im Bereich der Schleusenstation eine der Wandung entsprechend schräg vorspringende Dichtung vorgesehen ist, oder die Öffnung (36) aus einem Fenster in der Wandung oder aus einer Ausnehmung besteht, die durch eine im Bereich der Befestigungsvorrichtung abfallende Wandung gebildet ist, so dass die Bearbeitung durch das Fenster oder über den Rand der Wandung erfolgt.

2. Vorrichtung nach Anspruch 1, **dadurch gekennzeichnet, daß** eine durch die Dichtstelle (54) zwischen Schleusenkammer (44) und Vakuumkammer (12) definierte Ebene oberhalb der Bearbeitungsstation (18) liegt.

3. Vorrichtung nach Anspruch 1 oder 2, **dadurch gekennzeichnet, daß** die Transfervorrichtung (21) eine Drehbewegung zum Transport der Werkstücken (11) zwischen den Stationen (16, 18) und zur Abdichtung der Schleusenkammer (44) eine Hubbewegung senkrecht zur Transportrichtung der Werkstücke (11) oder eine Bewegung parallel zur Transportrichtung der Werkstücke (11) zwischen den Stationen (16, 18) ausführt.

4. Vorrichtung nach einem der vorhergehenden Ansprüche, **dadurch gekennzeichnet, daß** die Halter (28, 30) eine Drehantriebsvorrichtung (34) zum Drehen der Werkstücke (11) in der Bearbeitungsstation (18) aufweisen, wobei die Drehachse der Drehbewegung der Drehantriebsvorrichtungen im Halter (28, 30) vorzugsweise parallel zur Richtung der Andruckbewegung der Transfervorrichtung (21) liegt.

5. Vorrichtung nach einem der vorgehenden Ansprüche, **dadurch gekennzeichnet, daß** einen Dichtvorrichtung (38) vorgesehen ist, die in der Schleusenstation (16) die Öffnung (36) in der Wandung des jeweiligen Halters (28) druckdicht verschließt.

6. Vorrichtung nach Anspruch 5, **dadurch gekennzeichnet, daß** ein Schließkolben (40) vorgesehen ist, der von der Vakuumkammer (12) aus an den Rand der Öffnung (36) abdichtend anpreßbar ist, wobei der Schließkolben (40) oder ein ihn betätigendes Stellelement druckdicht durch die Wand der Vakuumkammer (12) geführt ist.

7. Vorrichtung nach einem der vorhergehenden Ansprüche, **dadurch gekennzeichnet, daß** wenigstens eine weitere Bearbeitungsstation vorgesehen ist, bei der auch eine Bearbeitung des Werkstückes in einer Richtung senkrecht zu der Bearbeitungsrichtung durch die Öffnung (36) vorgesehen sein kann, und an der wenigstens einen weiteren Bearbeitungsstation (18) ein schweißvorgang mit Hilfe eines Elektronenstrahles, ein Beschichtungsvorgang des Werkstückes und/oder eine Wärmebehandlung des Werkstückes durchführbar ist.

8. Vorrichtung nach einem der vorhergehenden Ansprüche, **dadurch gekennzeichnet, daß** die Transfervorrichtung (21) eine kombinierte Dreh--/Hubbewegung der Halter (28, 30) durchführt, wobei ein einziger Antrieb (26) über ein entsprechendes Getriebe (24) mit den Haltern (28, 30) zusammenwirkt.

9. Vorrichtung nach einem der vorhergehenden Ansprüche, **dadurch gekennzeichnet, daß** die becherförmigen Halter (28, 30) einstückig als Ausnehmung in einem Halterträger (22) ausgeformt sind.

10. Verwendung einer Vorrichtung nach einer der vorhergehenden Ansprüche, mit einer Elektronenstrahlvorrichtung in einer Bearbeitungsstation zum Verschweißen von Turbinenwellen und Turbinenrädern zu Turbinenrotoren.

## Claims

1. An apparatus for machining workpieces (11) in a vacuum, with a vacuum chamber (12) which has at least one lock station (16) and at least one machining station (18) with a machining device (20), and with a transfer device (21) which has at least one holder (28,30) for receiving the workpieces (11) and transports them between the stations (16,18), wherein the at least one holder (28,30) is provided with a peripheral wall, the upper edge of which can be moved in the lock station (16) by means of a relative pressing movement against a seal into a sealing position, in which the lock chamber (44) is sealed from the interior of the vacuum chamber (12), wherein the wall of each holder extends at least in sections substantially over the entire height of the workpieces to be machined and the height of the wall is considerably greater than the travel of the pressing movement, **characterised in that** the wall has a lateral opening (36) through which the machining of the respective workpiece (11) takes place in the machining station (18), wherein either the wall is obliquely downward sloping towards the machining device to form the opening so that the machining can take place there over the upper edge of the wall, wherein in the vicinity of the lock station a seal is provided which correspondingly projects obliquely over the wall, or the opening (36) comprises a window in the wall or a recess which is formed by a wall sloping downward in the vicinity of the fastening device, so that the machining takes place through the window or over the edge of the wall.

2. An apparatus according to Claim 1, **characterised in that** a plane defined by the sealing location (54) between the lock chamber (44) and the vacuum chamber (12) lies above the machining station (18).

3. An apparatus according to Claim 1 or 2, **characterised in that** the transfer device (21) carries out a rotating motion to transport the workpieces (11) between the stations (16,18) and to seal the lock chamber (44) it carries out a lifting movement perpendicular to the transport direction of the workpieces (11) or a movement parallel to the transport direction of the workpieces (11) between the stations (16, 18).

4. An apparatus according to any one of the preceding Claims, **characterised in that** the holders (28,30) have a rotary drive device (34) for rotating the workpieces (11) in the machining station (18), wherein the axis of rotation of the rotating motion of the rotary drive devices (34) in the holder (28,30) preferably lies parallel to the direction of the pressing movement of the transfer device (21).

5. An apparatus according to any one of the preceding Claims, **characterised in that** a sealing device (38) is provided, which in the lock station (16) seals in a pressure-tight manner the opening (36) in the wall of the respective holder (28).

6. An apparatus according to Claims 5, **characterised in that** a closing piston (4) is provided, which from the vacuum chamber (12) can be pressed fluidtightly against the rim of the opening (36), wherein the closing piston (40), or a control element actuating it, is guided in a pressure-tight manner through the wall of the vacuum chamber (12).

7. An apparatus according to any one of the preceding Claims, **characterised in that** at least one further machining station is provided, in which machining of the workpiece can also be provided in a direction perpendicular to the machining direction through the opening (36), and at the at least one further machining station (18) a welding operation can be carried out by means of an electron beam, a coating process of the workpiece and/or heat treatment of the workpiece.

8. An apparatus according to any one of the preceding Claims, **characterised in that** the transfer device (21) carries out a combined rotating/lifting movement of the holders (28,30), wherein a single drive means (26) co-operates with the holders (28,30) via a corresponding transmission (24).

9. An apparatus according to any one of the preceding Claims, **characterised in that** the cup-shaped holders (28,30) are formed in one piece as a recess in a holder carrier (22).

10. Use of an apparatus according to any one of the preceding Claims, with an electron-beam device in a machining station for welding turbine shafts and turbine wheels to form turbine rotors.

## Revendications

1. Dispositif d'usinage de pièces (11) sous vide comportant une chambre sous vide (12) comprenant au moins un poste de sas (16) et au moins un poste d'usinage (18) équipé d'un dispositif d'usinage (20), ainsi qu'un dispositif de transfert (21) comportant au moins un support (28, 30) de réception des pièces à usiner (11), et les transportant entre les postes (16, 18), ce support (28, 30) étant équipé d'une paroi périphérique dont le bord supérieur peut être déplacé dans le poste de sas (16) par un mouvement de compression relatif contre un joint d'étanchéité, dans une position d'étanchéité dans laquelle la chambre de sas (44) est rendue étanche vis-à-vis de la partie interne de la chambre sous vide (12), la paroi de chaque support s'étendant au moins dans des zones partielles, essentiellement sur la totalité de la hauteur de la pièce à usiner et la hauteur de la paroi étant beaucoup plus grande que la course du mouvement de compression,
**caractérisé en ce que**
la paroi comporte une ouverture latérale (36) par laquelle, dans le poste d'usinage (18) s'effectue l'usinage des pièces respectives (11), la paroi étant inclinée obliquement vers le dispositif d'usinage pour former l'ouverture de sorte que l'usinage puisse s'effectuer sur le bord supérieur de la paroi, une étanchéité s'avançant obliquement correspondant à la paroi étant prévue dans la zone du poste de sas, ou l'ouverture (36) est constituée d'une fenêtre dans la paroi ou d'une cavité formée par une paroi inclinée dans la zone du dispositif de fixation de sorte que l'usinage s'effectue au travers de la fenêtre ou sur le bord de la paroi.

2. Dispositif conforme à la revendication 1,
**caractérisé en ce que**
le plan défini par la ligne d'étanchéité (54) entre la chambre de sas (44) et la chambre sous vide (12) est situé au-dessus du poste d'usinage (18).

3. Dispositif conforme à la revendication 1 ou 2,
**caractérisé en ce que**
le dispositif de transfert (21) effectue un mouvement de rotation pour permettre le transport des pièces à usiner (11) entre les postes (16, 18) et pour réaliser l'étanchéité de la chambre de sas (44) ce dispositif effectue un mouvement de levage perpendiculaire à la direction de transport des pièces à usiner (11) ou un mouvement parallèle à la direction de transport des pièces à usiner (11) entre les postes (16, 18).

4. Dispositif conforme à l'une des revendications précédentes,
**caractérisé en ce que**
les supports (28, 30) comportent un dispositif d'entrainement en rotation (34) pour permettre la rotation des pièces à usiner (11) dans le poste d'usinage (18), l'axe de rotation du mouvement de rotation des dispositifs d'entrainement en rotation dans les supports (28, 30) étant de préférence parallèle à la direction du mouvement de compression du dispositif de transfert (21).

5. Dispositif conforme à l'une des revendications précédentes,
**caractérisé en ce qu'**
il est prévu un dispositif d'étanchéité (38) qui ferme de façon étanche à la pression l'ouverture (36) de la paroi du support (28) respectif dans le poste de sas (16).

6. Dispositif conforme à la revendication 5,
**caractérisé en ce qu'**
il est prévu un piston de fermeture (40) qui à partir de la chambre sous vide (12) peut être comprimé de façon étanche sur le bord de l'ouverture (36), ce piston de fermeture (40) ou un élément de réglage actionné par celui-ci étant transféré de façon étanche à la pression à travers la paroi de la chambre sous vide (12).

7. Dispositif conforme à l'une des revendications précédentes,
**caractérisé en ce qu'**
il est prévu au moins un poste d'usinage auxiliaire dans lequel on peut également effectuer un usinage de la pièce dans une direction perpendiculaire à la direction d'usinage au travers de l'ouverture (36) et, au niveau de ce poste d'usinage (18) auxiliaire on peut effectuer un procédé de soudage à l'aide d'un faisceau électronique, un processus de revêtement de la pièce et/ou un traitement thermique de celle-ci.

8. Dispositif conforme à l'une des revendications précédentes,
**caractérisé en ce que**
le dispositif de transfert (21) effectue un déplacement de rotation/levage combiné des supports (28, 30), un seul organe d'entrainement (26) coopérant avec les supports (28, 30) par l'intermédiaire d'une transmission (24) correspondante.

9. Dispositif conforme à l'une des revendications précédentes,
**caractérisé en ce que**
les supports en forme de coupelles (28, 30) sont formés en une seule pièce sous la forme de cavités dans un porte support (22).

10. Utilisation d'un dispositif conforme à l'une des revendications précédentes comportant un dispositif à faisceau électronique dans un poste d'usinage pour souder des arbres de turbine et des roues de turbine pour obtenir des rotors de turbine.
